# EUROPÄISCHE PATENTANMELDUNG

(11) **EP 4 485 698 A1**
(43) Veröffentlichungstag der Anmeldung: **01.01.2025**
(21) Anmeldenummer: 24167459.7
(22) Anmeldetag: 28.03.2024
(51) Int. Cl.: H01R 4/02, H01R 13/03, H01R 24/38, H01R 13/533

(54) **TANKSYSTEM**

(30) Priorität: 28.06.2023 DE 102023117010
(71) Anmelder: Friedrich Boysen GmbH & Co. KG, 72213 Altensteig (DE)
(72) Erfinder: Bessey, Dirk, 71083 Herrenberg (DE); Faiß, Manuel Eugen, 72181 Starzach (DE); Rall, Christian Klaus, 72213 Altensteig (DE); Dengler, Lukas, 72285 Pfalzgrafenweiler (DE)
(74) Vertreter: Manitz Finsterwald Patent- und Rechtsanwaltspartnerschaft mbB

(57) **Zusammenfassung**

Ein Tanksystem umfasst einen Kryobehälter zum Speichern eines verflüssigten Gases, wobei der Kryobehälter eine wenigstens doppelwandige Hülle aufweist, die einen Speicherraum für das verflüssigte Gas umschließt, ein erstes elektrisches Kontaktelement und ein separates zweites elektrisches Kontaktelement, die in dem Speicherraum angeordnet sind, und eine elektrische Leitung, die elektrisch mit den Kontaktelementen verbunden ist, wobei die elektrische Leitung als Koaxialleitung ausgeführt ist und wenigstens einen Innenleiter aus Stahl, einen den wenigstens einen Innenleiter umhüllenden Isoliermantel aus einem elektrisch isolierenden Material und einen den Isoliermantel umhüllenden Schirm aus Stahlgeflecht umfasst. Der Innenleiter ragt an einem ersten Ende der Koaxialleitung in Leitungsrichtung über den Isoliermantel hinaus, wobei der hinausragende Abschnitt mit dem ersten Kontaktelement verschweißt ist. Der Schirm ist an dem ersten Ende der Koaxialleitung quer oder schräg zur Leitungsrichtung vom Isoliermantel weggeführt, wobei der weggeführte Abschnitt mit dem zweiten Kontaktelement verschweißt ist.

## Beschreibung

Die Erfindung betrifft ein Tanksystem mit einem Kryobehälter zum Speichern eines verflüssigten Gases, wobei der Kryobehälter eine wenigstens doppelwandige Hülle aufweist, die einen Speicherraum für das verflüssigte Gas umschließt, einem ersten elektrischen Kontaktelement und einem separaten zweiten elektrischen Kontaktelement, die in dem Speicherraum angeordnet sind, und einer wenigstens zweiadrigen elektrischen Leitung, die elektrisch mit den Kontaktelementen verbunden ist.

Solche Tanksysteme werden beispielsweise dazu eingesetzt, Kraftstoffe wie Wasserstoff oder Erdgas auf Kraftfahrzeugen mitzuführen. Kryobehälter sind dafür ausgelegt, verflüssigte Gase für einen längeren Zeitraum auf einem besonders tiefen Temperaturniveau zu halten, so dass eine vergleichsweise große Gasmenge bei relativ geringem Druck gespeichert werden kann. Dies wird im Allgemeinen durch eine wärmeisolierende Ausführung der Hülle erzielt, insbesondere durch eine Doppelwandstruktur mit Vakuum. Prinzipiell kann die Hülle auch eine Dreifachwandstruktur oder eine andere Mehrfachwandstruktur aufweisen. Bei Bedarf kann auch eine aktive Kühlung des Kryobehälters erfolgen. Moderne Kryobehälter sind in der Lage, Flüssigwasserstoff für einen Zeitraum von mehreren Tagen bei einer Temperatur von -253°C oder weniger zu halten.

In Kryobehältern sind im Allgemeinen elektrische Einrichtungen wie Füllstandssensoren, Temperatursensoren und dergleichen anzuordnen. In der Praxis ist es jedoch anspruchsvoll, innerhalb des Speicherraums zuverlässige elektrische Verbindungen bereitzustellen. Bei Steckverbindungen besteht das Problem, dass viele in herkömmlichen Steckern verwendete Kunststoffe nicht für die Bedingungen in Kryobehältern geeignet sind. Lötverbindungen gehen im Allgemeinen mit ungünstigen Materialpaarungen einher. Insbesondere können die unterschiedlichen thermischen Ausdehnungskoeffizienten des Weichlots und des Grundwerkstoffs bei wiederholten ausgeprägten Temperaturänderungen zu Problemen führen. Bei Schraub- und Klemmverbindungen kann es infolge wiederholter Kühlvorgänge zu unerwünschten Änderungen des Übergangswiderstands kommen.

Es ist eine Aufgabe der Erfindung, bei einem Tanksystem der vorstehend genannten Art die Übertragung von Signalen und/oder Versorgungsenergie im Speicherraum mittels einer elektrischen Leitung zuverlässiger zu gestalten.

Die Lösung erfolgt durch ein Tanksystem mit den Merkmalen des Anspruchs 1.

Die Erfindung sieht vor, dass die elektrische Leitung als Koaxialleitung ausgeführt ist und wenigstens einen Innenleiter aus Stahl, einen den wenigstens einen Innenleiter umhüllenden Isoliermantel aus einem elektrisch isolierenden Material und einen den Isoliermantel umhüllenden Schirm aus Stahlgeflecht umfasst, wobei der Innenleiter an einem ersten Ende der Koaxialleitung in Leitungsrichtung über den Isoliermantel hinausragt und der hinausragende Abschnitt des Innenleiters mit dem ersten Kontaktelement verschweißt ist, und wobei der Schirm an dem ersten Ende der Koaxialleitung quer oder schräg zur Leitungsrichtung vom Isoliermantel weggeführt ist und der weggeführte Abschnitt des Schirms mit dem zweiten Kontaktelement verschweißt ist.

Die beiden Kontaktstellen sind durch den ohnehin vorhandenen Isoliermantel der Koaxialleitung voneinander isoliert, so dass sich die Bereitstellung eines zusätzlichen Kunststoff-Isolators wie zum Beispiel eines Steckerkörpers aus Polymer erübrigt. Dies spart nicht nur Fertigungskosten, sondern vermeidet auch die Probleme der Anfälligkeit gängiger Steckerkomponenten für die extremen Bedingungen in Kryotanks. Durch die Ausführung des Innenleiters und des Schirms als Stahlkomponenten werden Schweißverbindungen ermöglicht, welche die Probleme von Paarungen unterschiedlicher Materialien sowie von zweiteiligen Verbindungen vermeiden und infolge des stoffschlüssigen Charakters eine besonders zuverlässige Übertragung elektrischer Signale und/oder Energie in Kryobehältern ermöglichen.

Vorzugsweise ist vorgesehen, dass das erste Kontaktelement und der Innenleiter aus dem gleichen Material gefertigt sind und/oder dass das zweite Kontaktelement und der Schirm aus dem gleichen Material gefertigt sind. Somit weisen die miteinander verschweißten Bauteile gleiche thermische Ausdehnungskoeffizienten auf und es kommt selbst bei häufigen und ausgeprägten Temperaturwechseln nicht zu einer Schwächung der elektrischen Verbindung.

Der Innenleiter, der Schirm, das erste Kontaktelement und/oder das zweite Kontaktelement sind bevorzugt aus Edelstahl gefertigt. Elektrische Leiter aus Edelstahl sind auch in besonders korrosiven Umgebungen zuverlässig verwendbar. Vorzugsweise sind der Innenleiter, der Schirm, das erste Kontaktelement und/oder das zweite Kontaktelement aus einem austenitischen Edelstahl, insbesondere aus einem Chrom-Nickel-Stahl, gefertigt, um eine ausreichende Beständigkeit in einer Wasserstoffumgebung sicherzustellen.

Der Isoliermantel kann aus einem Kunststoff, bevorzugt aus einem Fluorkunststoff, besonders bevorzugt aus Polytetrafluorethylen (PTFE), gefertigt sein. Fluorkunststoffe weisen eine beträchtliche Stabilität und Korrosionsfestigkeit auf, so dass sie sogar in besonders materialbelastenden Bereichen wie Flüssigwasserstofftanks eine zuverlässige und dauerhafte Isolierwirkung entfalten.

Zwischen dem hinausragenden Abschnitt des Innenleiters und dem ersten Kontaktelement kann eine Wolfram-Inertgas-Schweißverbindung oder eine Widerstandsschweißverbindung gebildet sein. Alternativ oder zusätzlich kann zwischen dem weggeführten Abschnitt des Schirms und dem zweiten Kontaktelement eine Wolfram-Inertgas-Schweißverbindung oder eine Widerstandsschweißverbindung gebildet sein. Derartige Schweißverbindungen haben sich als besonders zuverlässig erwiesen.

Gemäß einer Ausführungsform der Erfindung ist in dem Speicherraum ein Füllstandssensor mit einem Zylinderkondensator angeordnet, wobei der Zylinderkondensator einen das erste Kontaktelement bildenden Innenzylinder aus Stahl sowie einen das zweite Kontaktelement bildenden Außenzylinder aus Stahl, oder umgekehrt, umfasst. Kapazitive Füllstandssensoren sind in der Lage, die Füllmenge in Kryobehältern zuverlässig zu erfassen. Da die Zylinder des Kondensators aus Stahl gefertigt sind, können der Innenleiter und der Schirm der Koaxialleitung direkt an diese angeschweißt werden.

Die Koaxialleitung kann mittels einer Stahlschelle an den Außenzylinder angeklemmt sein, um eine Zugentlastung vorzusehen. Als zusätzlicher Effekt ergibt sich eine verbesserte Kontaktierung, wenn der Schirm der Koaxialleitung wie bevorzugt zumindest bis zur Stahlschelle freiliegt und demgemäß flächig gegen den Außenzylinder gedrückt wird.

Eine weitere Ausführungsform der Erfindung sieht vor, dass an dem ersten Ende der Koaxialleitung ein Koaxial-Steckverbinder mit einem zentralen Anschluss-Stift und einer äußeren Anschluss-Hülse angeordnet ist, wobei der zentrale Anschluss-Stift das erste Kontaktelement bildet und die äußere Anschluss-Hülse das zweite Kontaktelement bildet. Somit kann die Koaxialleitung in einfacher und schneller Weise durch Stecken mit einem Endgerät oder mit einer weiteren Leitung verbunden werden. Der Koaxial-Steckverbinder kann hierbei als Koaxial-Stecker oder als Koaxial-Buchse ausgeführt sein.

Der zentrale Anschluss-Stift kann im Bereich der Schweißverbindung neben dem Innenleiter verlaufen. Das heißt der zentrale Anschluss-Stift kann flach mit dem Innenleiter verschweißt sein.

Alternativ kann vorgesehen sein, dass der zentrale Anschluss-Stift einen Hohlraum aufweist und der Innenleiter in dem Hohlraum aufgenommen ist.

Gemäß einer speziellen Ausgestaltung der Erfindung ist der weggeführte Abschnitt des Schirms in verdrilltem Zustand an der äußeren Anschluss-Hülse angeschweißt. Die äußere Anschluss-Hülse kann hierfür mit einer Ausnehmung versehen sein, durch welche das verdrillte Stahlgeflecht zur hinteren Hülsenbasis geführt ist.

Alternativ kann der weggeführte Abschnitt des Schirms zwischen der äußeren Anschluss-Hülse und einer Klemmhülse eingeklemmt sein, vorzugsweise in aufgefächertem Zustand.

Gemäß einer speziellen Ausgestaltung der Erfindung ist der Kryobehälter zur Befestigung am Tragrahmen eines Kraftfahrzeugs ausgebildet. Bei ortsbeweglichen Tanksystemen für Fahrzeuge wie zum Beispiel Brennstoffzellen-Fahrzeuge hat sich eine erfindungsgemäße Gestaltung als besonders günstig erwiesen.

Die Erfindung betrifft auch ein Verfahren zum Herstellen eines Tanksystems, insbesondere eines wie vorstehend beschriebenen Tanksystems, mit den Schritten:
(i) Bereitstellen eines Kryobehälters, der eine wenigstens doppelwandige Hülle aufweist, die einen Speicherraum für ein verflüssigtes Gas umschließt,
(ii) Anordnen eines ersten elektrischen Kontaktelements und eines separaten zweiten elektrischen Kontaktelements in dem Speicherraum,
(iii) Bereitstellen einer elektrischen Leitung, die als Koaxialleitung ausgeführt ist und wenigstens einen Innenleiter aus Stahl, einen den wenigstens einen Innenleiter umhüllenden Isoliermantel aus einem elektrisch isolierenden Material und einen den Isoliermantel umhüllenden Schirm aus Stahlgeflecht umfasst,
(iv) Verschweißen eines an einem ersten Ende der Koaxialleitung in Leitungsrichtung über den Isoliermantel hinausragenden Abschnitts des Innenleiters mit dem ersten Kontaktelement, und
(v) Verschweißen eines an dem ersten Ende der Koaxialleitung quer oder schräg zur Leitungsrichtung vom Isoliermantel weggeführten Abschnitts des Schirms mit dem zweiten Kontaktelement.

Bei einem erfindungsgemäßen Verfahren muss kein Steckerkörper, Schraubklemme oder dergleichen mit einem Isolator aus Polymer bereitgestellt werden, weil der Isoliermantel der Koaxialleitung selbst die Isolierwirkung bereitstellt.

Vorzugsweise werden die Schritte (iv) und (v) mittels Wolfram-Inertgas-Schweißen oder mittels Widerstandsschweißen durchgeführt. Dies hat sich als besonders günstig erwiesen.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine schematische Darstellung eines erfindungsgemäßen Tanksystems.
- Fig. 2: zeigt eine Koaxialleitung des Tanksystems gemäß Fig. 1 in einer perspektivischen Teilansicht.
- Fig. 3: zeigt einen Füllstandssensor des Tanksystems gemäß Fig. 1 mit angeschlossener Koaxialleitung in einer perspektivischen Teilansicht.
- Fig. 4: zeigt eine Anordnung aus Koaxialleitung und Koaxial-Steckverbinder eines erfindungsgemäßen Tanksystems.
- Fig. 5: zeigt eine alternativ gestaltete Anordnung aus Koaxialleitung und Koaxial-Steckverbinder eines erfindungsgemäßen Tanksystems.
- Fig. 6: zeigt einen Teil eines weiteren alternativ gestalteten Koaxial-Steckverbinders eines erfindungsgemäßen Tanksystems.

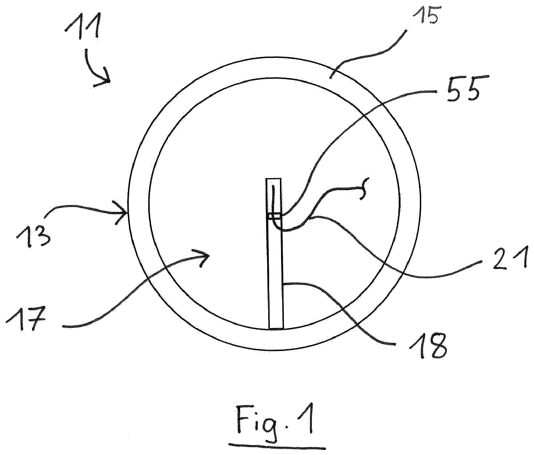

Das in Fig. 1 in vereinfachter Form gezeigte Tanksystem 11 ist als Kraftstofftanksystem für ein Nutzfahrzeug ausgelegt und umfasst einen Kryobehälter 13 zum Speichern von Flüssigwasserstoff. Um eine ausreichende Wärmeisolierung bereitzustellen, weist der Kryobehälter 13 eine doppelwandige evakuierte Hülle 15 auf, vorzugsweise aus Edelstahl, die einen Speicherraum 17 für den verflüssigten Wasserstoff umschließt.

Weiterhin umfasst das Tanksystem 11 einen im Speicherraum 17 angeordneten Füllstandssensor 18, an den eine elektrische Leitung 21 zur Übermittlung der Sensorsignale an eine nicht gezeigte elektronische Auswertungseinheit angeschlossen ist. Die elektrische Leitung 21 kann hierfür mittels einer Leitungsdurchführung nach außen geführt sein.

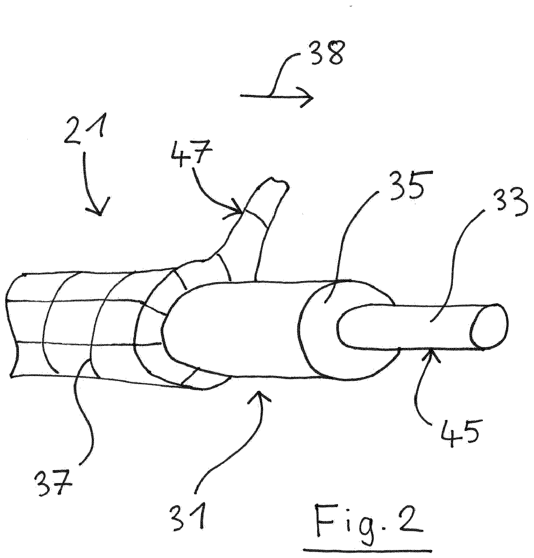

Die in Fig. 2 einzeln dargestellte Leitung 21 ist als Koaxialleitung 31 ausgeführt und umfasst einen Innenleiter 33 aus Stahl, einen den Innenleiter 33 umhüllenden Isoliermantel 35 aus einem elektrisch isolierenden Material und einen den Isoliermantel 35 umhüllenden Schirm 37 aus Stahlgeflecht. Der Isoliermantel 35 ist vorzugsweise aus einem Fluorkunststoff wie Polytetrafluorethylen (PTFE) gefertigt, könnte jedoch grundsätzlich auch aus einem anderen Kunststoff gefertigt sein. Eine isolierende Außenhülle könnte ebenfalls vorgesehen sein, was in Fig. 2 jedoch nicht gezeigt ist.

Wie dargestellt ragt ein Abschnitt 45 des Innenleiters 33 am Ende der Koaxialleitung 31 in Leitungsrichtung 38 über den Isoliermantel 35 hinaus. Ferner ist ein Abschnitt 47 des Schirms 37 an dem betreffenden Ende der Koaxialleitung 31 quer oder schräg zur Leitungsrichtung 38 vom Isoliermantel 35 weggeführt, beispielsweise durch Biegen in verdrilltem Zustand.

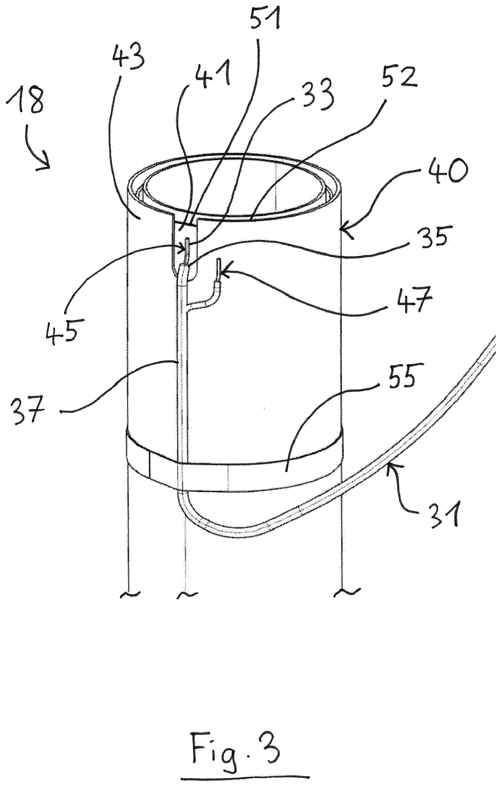

Der Füllstandssensor 18 ist in Fig. 3 genauer dargestellt. Er ist für eine kapazitive Füllmengenerfassung ausgelegt und umfasst einen Zylinderkondensator 40 mit einem Innenzylinder 41 und einem Außenzylinder 43. Sowohl der Innenzylinder 41 als auch der Außenzylinder 43 sind aus wasserstofftauglichem Edelstahl gefertigt, vorzugsweise aus dem gleichen Edelstahl, aus welchem der Innenleiter 33 und der Schirm 37 der Koaxialleitung 31 gefertigt sind.

Der hinausragende Abschnitt 45 des Innenleiters 33 ist mit dem Innenzylinder 41 flach verschweißt, wohingegen der weggeführte Abschnitt 47 des Schirms 37 mit dem Außenzylinder 43 flach verschweißt ist. Die Koaxialleitung 31 ist somit elektrisch mit dem Füllstandssensor 18 verbunden, wobei der Innenzylinder 41 ein erstes Kontaktelement 51 bildet und der Außenzylinder 43 ein zweites Kontaktelement 52 bildet. Die elektrische Trennung der beiden Kontaktelemente 51, 52 erfolgt durch den Isoliermantel 35 der Koaxialleitung 31 und durch das umgebende Medium.

Für eine Zugentlastung ist die Koaxialleitung 31 mittels einer Stahlschelle 55 an den Außenzylinder 43 angeklemmt. Da die Koaxialleitung 31 ohne isolierenden Außenmantel ausgeführt ist, wird durch die Stahlschelle 55 der Schirm 37 flächig gegen den Außenzylinder 43 gedrückt. Somit verbessert die Klemmung den elektrischen Kontakt. Grundsätzlich könnte bei der Ausführungsform der Fig. 3 die Koaxialleitung 31 einen isolierenden Außenmantel aufweisen. Es ist jedoch bevorzugt, dass ein solcher Außenmantel im Bereich der Stahlschelle 55 unterbrochen ist oder bezogen auf eine von dem Zylinderkondensator 40 weg weisende Leitungsrichtung erst nach der Stahlschelle 55 beginnt.

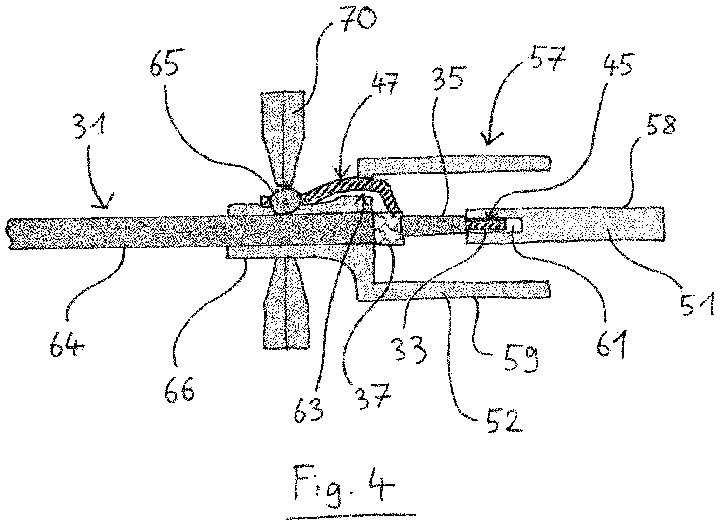

Die Koaxialleitung 31 kann in einem erfindungsgemäßen Tanksystem 11 nicht nur mit einem Sensor elektrisch verbunden sein, sondern auch mit einer anderen elektrischen Einrichtung, die zwei Kontaktelemente 51, 52 aufweist. Beispielhaft ist in Fig. 4 eine Koaxialleitung 31 gezeigt, an deren Ende ein Koaxial-Steckverbinder 57 mit einem zentralen Anschluss-Stift 58 und einer äußeren Anschluss-Hülse 59 angeordnet ist. Sowohl der zentrale Anschluss-Stift 58 als auch die äußere Anschluss-Hülse 59 sind aus wasserstofftauglichem Edelstahl gefertigt.

Der zentrale Anschluss-Stift 58 weist einen Hohlraum 61 auf, in welchem der hinausragende Abschnitt 45 des Innenleiters 33 aufgenommen ist. Der in dem Hohlraum 61 aufgenommene Abschnitt 45 des Innenleiters 33 ist ferner mit dem Anschluss-Stift 58 verschweißt. Der weggeführte Abschnitt 47 des Schirms 37 ist in verdrilltem Zustand durch eine Ausnehmung 63 der äußeren Anschluss-Hülse 59 aus dieser herausgeführt und unter Bildung einer Schweißverbindung 65 mit einem rückwärtigen Abschnitt 66 der äußeren Anschluss-Hülse 59 verschweißt. Somit bildet bei der Ausführungsform der Fig. 4 der zentrale Anschluss-Stift 58 das erste Kontaktelement 51, während die äußere Anschluss-Hülse 59 das zweite Kontaktelement 52 bildet. Bei dem Ausführungsbeispiel der Fig. 4 weist die Koaxialleitung 31 einen isolierenden Außenmantel 64 auf.

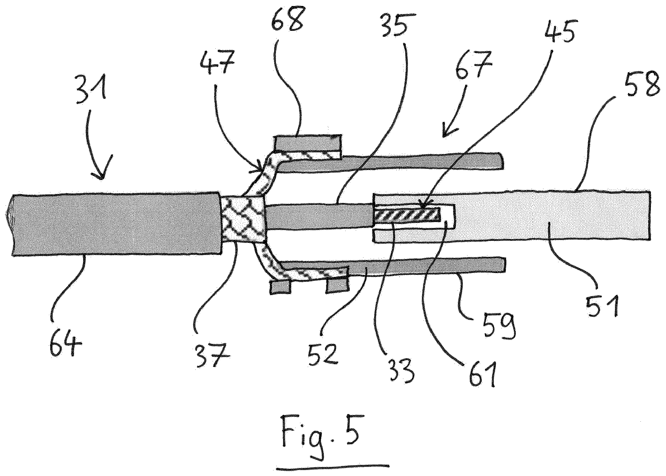

In Fig. 5 ist eine alternative Ausgestaltung einer Koaxialleitung 31 mit endseitigem Koaxial-Steckverbinder 67 gezeigt. Wie bei der Ausführungsform gemäß Fig. 4 umfasst der Koaxial-Steckverbinder 67 einen zentralen Anschluss-Stift 58 und eine äußere Anschluss-Hülse 59, die beide aus wasserstofftauglichem Edelstahl gefertigt sind. Der hinausragende Abschnitt 45 des Innenleiters 33 ist auch hier im Hohlraum 61 des zentralen Anschluss-Stifts 58 aufgenommen und mit diesem verschweißt. Der weggeführte Abschnitt 47 des Schirms 37 ist jedoch nicht verdrillt, sondern aufgefächert und zwischen der äußeren Anschluss-Hülse 59 und einer diese umgreifenden Klemmhülse 68 eingeklemmt. Zusätzlich ist der eingeklemmte Schirm 37 mit der äußeren Anschluss-Hülse 59 und mit der Klemmhülse 68 verschweißt.

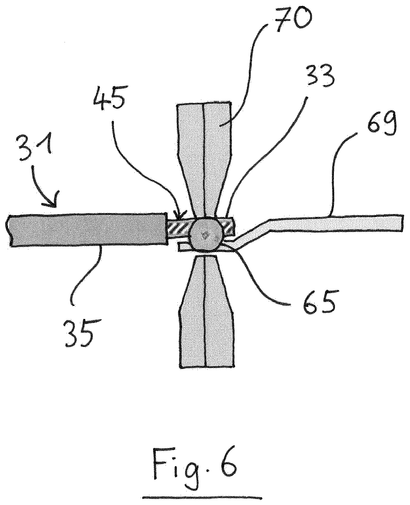

Der zentrale Anschluss-Stift 69 kann auch wie in Fig. 6 gezeigt ohne Hohlraum ausgeführt und flach mit dem Innenleiter 33 verschweißt sein.

Das erfindungsgemäße Tanksystem 11 (Fig. 1) kann modulartig ausgeführt sein, so dass es bei unterschiedlichen Nutzfahrzeugen als Kraftstofftank eingesetzt werden kann.

Bei der Herstellung des Tanksystems 11 wird zunächst der Kryobehälter 13 einschließlich des montierten Füllstandssensors 18 sowie der Koaxialleitung 31 bereitgestellt. Die Koaxialleitung 31 wird an einem Ende so vorbereitet, dass der Innenleiter 33 in Leitungsrichtung 38 über den Isoliermantel 35 hinausragt und der Schirm 37 quer oder schräg zur Leitungsrichtung vom Isoliermantel 35 weggeführt ist. Der über den Isoliermantel 35 hinausragende Abschnitt 45 des Innenleiters 33 wird dann mittels einer Schweißvorrichtung mit dem ersten Kontaktelement 51 verschweißt. Beispielhaft ist in Fig. 4 und 6 ein Widerstands-Schweißgerät 70 gezeigt. Ebenso wird der quer oder schräg zur Leitungsrichtung 38 vom Isoliermantel 35 weggeführte Abschnitt 47 des Schirms 37 mittels des Widerstands-Schweißgeräts 70 mit dem zweiten Kontaktelement 52 verschweißt. Grundsätzlich kann auch mit einem Wolfram-Inertgas-Schweißgerät oder einem anderen Schweißgerät geschweißt werden.

Die Erfindung stellt eine zuverlässige elektrische Schnittstelle für den Einsatz in Kryobehältern 13 bereit, die anfällige Polymere, zweiteilige Verbindungen sowie ungünstige Materialpaarungen vermeidet.

### Bezugszeichenliste:

- 11: Tanksystem
- 13: Kryobehälter
- 15: Hülle
- 17: Speicherraum
- 18: Füllstandssensor
- 21: elektrische Leitung
- 31: Koaxialleitung
- 33: Innenleiter
- 35: Isoliermantel
- 37: Schirm
- 40: Zylinderkondensator
- 41: Innenzylinder
- 43: Außenzylinder
- 45: hinausragender Abschnitt
- 47: weggeführter Abschnitt
- 51: erstes Kontaktelement
- 52: zweites Kontaktelement
- 55: Stahlschelle
- 57: Koaxial-Steckverbinder
- 58: zentraler Anschluss-Stift
- 59: äußere Anschluss-Hülse
- 61: Hohlraum
- 63: Ausnehmung
- 65: Schweißverbindung
- 64: Außenmantel
- 66: rückwärtiger Abschnitt
- 67: Koaxial-Steckverbinder
- 68: Klemmhülse
- 69: Anschluss-Stift
- 70: Widerstands-Schweißgerät

## Patentansprüche

1. Tanksystem (11) mit
einem Kryobehälter (13) zum Speichern eines verflüssigten Gases, wobei der Kryobehälter (13) eine wenigstens doppelwandige Hülle (15) aufweist, die einen Speicherraum (17) für das verflüssigte Gas umschließt,
einem ersten elektrischen Kontaktelement (51) und einem separaten zweiten elektrischen Kontaktelement (52), die in dem Speicherraum (17) angeordnet sind, und
einer wenigstens zweiadrigen elektrischen Leitung (21), die elektrisch mit den Kontaktelementen (51, 52) verbunden ist,
wobei die elektrische Leitung (21) als Koaxialleitung (31) ausgeführt ist und wenigstens einen Innenleiter (33) aus Stahl, einen den wenigstens einen Innenleiter (33) umhüllenden Isoliermantel (35) aus einem elektrisch isolierenden Material und einen den Isoliermantel (35) umhüllenden Schirm (37) aus Stahlgeflecht umfasst,
wobei der Innenleiter (33) an einem ersten Ende der Koaxialleitung (31) in Leitungsrichtung (38) über den Isoliermantel (35) hinausragt und der hinausragende Abschnitt (45) des Innenleiters (33) mit dem ersten Kontaktelement (51) verschweißt ist, und
wobei der Schirm (37) an dem ersten Ende der Koaxialleitung (31) quer oder schräg zur Leitungsrichtung (38) vom Isoliermantel (35) weggeführt ist und der weggeführte Abschnitt (47) des Schirms (37) mit dem zweiten Kontaktelement (52) verschweißt ist.

2. Tanksystem nach Anspruch 1,
wobei das erste Kontaktelement (51) und der Innenleiter (33) aus dem gleichen Material gefertigt sind und/oder
wobei das zweite Kontaktelement (52) und der Schirm (37) aus dem gleichen Material gefertigt sind.

3. Tanksystem nach Anspruch 1 oder 2,
wobei der Innenleiter (33), der Schirm (37), das erste Kontaktelement (51) und/oder das zweite Kontaktelement (52) aus Edelstahl gefertigt sind.

4. Tanksystem nach einem der vorstehenden Ansprüche,
wobei der Isoliermantel (35) aus einem Kunststoff, bevorzugt aus einem Fluorkunststoff, besonders bevorzugt aus Polytetrafluorethylen (PTFE), gefertigt ist.

5. Tanksystem nach einem der vorstehenden Ansprüche,
wobei zwischen dem hinausragenden Abschnitt (45) des Innenleiters (33) und dem ersten Kontaktelement (51) eine Wolfram-Inertgas-Schweißverbindung oder eine Widerstandsschweißverbindung (65) gebildet ist und/oder
wobei zwischen dem weggeführten Abschnitt (47) des Schirms (37) und dem zweiten Kontaktelement (52) eine Wolfram-Inertgas-Schweißverbindung oder eine Widerstandsschweißverbindung (65) gebildet ist.

6. Tanksystem nach einem der vorstehenden Ansprüche,
wobei in dem Speicherraum (17) ein Füllstandssensor (18) mit einem Zylinderkondensator (40) angeordnet ist, wobei der Zylinderkondensator (40) einen das erste Kontaktelement (51) bildenden Innenzylinder (41) aus Stahl sowie einen das zweite Kontaktelement (52) bildenden Außenzylinder (43) aus Stahl, oder umgekehrt, umfasst.

7. Tanksystem nach Anspruch 6,
wobei die Koaxialleitung (31) mittels einer Stahlschelle (55) an den Außenzylinder (43) angeklemmt ist.

8. Tanksystem nach einem der vorstehenden Ansprüche,
wobei an dem ersten Ende der Koaxialleitung (31) ein Koaxial-Steckverbinder (57, 67) mit einem zentralen Anschluss-Stift (58, 69) und einer äußeren Anschluss-Hülse (59) angeordnet ist, wobei der zentrale Anschluss-Stift (58, 69) das erste Kontaktelement (51) bildet und die äußere Anschluss-Hülse (59) das zweite Kontaktelement (52) bildet.

9. Tanksystem nach Anspruch 8,
wobei der zentrale Anschluss-Stift (69) im Bereich der Schweißverbindung (65) neben dem Innenleiter (33) verläuft.

10. Tanksystem nach Anspruch 8,
wobei der zentrale Anschluss-Stift (58) einen Hohlraum (61) aufweist und der Innenleiter (33) in dem Hohlraum (61) aufgenommen ist.

11. Tanksystem nach einem der Ansprüche 8 bis 10,
wobei der weggeführte Abschnitt (47) des Schirms (37) in verdrilltem Zustand an der äußeren Anschluss-Hülse (59) angeschweißt ist.

12. Tanksystem nach einem der Ansprüche 8 bis 10,
wobei der weggeführte Abschnitt (47) des Schirms (37) zwischen der äußeren Anschluss-Hülse (59) und einer Klemmhülse (68) eingeklemmt ist.

13. Tanksystem nach einem der vorstehenden Ansprüche,
wobei der Kryobehälter (13) zur Befestigung am Tragrahmen eines Kraftfahrzeugs ausgebildet sind.

14. Verfahren zum Herstellen eines Tanksystems (11), insbesondere eines Tanksystems (11) nach einem der vorstehenden Ansprüche, mit den Schritten:
(i) Bereitstellen eines Kryobehälters (13), der eine wenigstens doppelwandige Hülle (15) aufweist, die einen Speicherraum (17) für ein verflüssigtes Gas umschließt,
(ii) Anordnen eines ersten elektrischen Kontaktelements (51) und eines separaten zweiten elektrischen Kontaktelements (52) in dem Speicherraum (17),
(iii) Bereitstellen einer elektrischen Leitung (21), die als Koaxialleitung (31) ausgeführt ist und wenigstens einen Innenleiter (33) aus Stahl, einen den wenigstens einen Innenleiter (33) umhüllenden Isoliermantel (35) aus einem elektrisch isolierenden Material und einen den Isoliermantel (35) umhüllenden Schirm (37) aus Stahlgeflecht umfasst,
(iv) Verschweißen eines an einem ersten Ende der Koaxialleitung (31) in Leitungsrichtung (38) über den Isoliermantel (35) hinausragenden Abschnitts des Innenleiters (33) mit dem ersten Kontaktelement, und
(v) Verschweißen eines an dem ersten Ende der Koaxialleitung (31) quer oder schräg zur Leitungsrichtung (38) vom Isoliermantel (35) weggeführten Abschnitts (47) des Schirms (37) mit dem zweiten Kontaktelement (52).

15. Verfahren nach Anspruch 14,
wobei die Schritte (iv) und (v) mittels Wolfram-Inertgas-Schweißen oder mittels Widerstandsschweißen durchgeführt werden.
